Europäisches Patentamt

European Patent Office

Office européen des brevets

(19)

(11) Veröffentlichungsnummer: **0 336 919**
**A1**

# (12) EUROPÄISCHE PATENTANMELDUNG

(21) Anmeldenummer: **89890040.2**

(22) Anmeldetag: **15.02.89**

(51) Int. Cl.⁴: **A 23 L 1/32**
**A 23 L 1/24, A 23 B 5/00**

(30) Priorität: **24.03.88 AT 791/88**

(43) Veröffentlichungstag der Anmeldung:
**11.10.89 Patentblatt 89/41**

(84) Benannte Vertragsstaaten:
**AT BE CH DE ES FR GB GR IT LI LU NL SE**

(71) Anmelder: **Schneider, Birgit**
**Uferstrasse 35**
**A-2620 Loipersbach (AT)**

**Schneider, Gernot**
**Uferstrasse 35**
**A-2620 Loipersbach (AT)**

(72) Erfinder: **Schneider, Birgit**
**Uferstrasse 35**
**A-2620 Loipersbach Niederösterreich (AT)**

**Pfannhauser, Werner, Dr. Ing.**
**Kreuzgasse 79**
**A-1180 Wien (AT)**

(74) Vertreter: **Beer, Otto, Dipl.-Ing. et al**
**Patentanwälte Dipl.-Ing. Otto Beer Dipl.-Ing. Manfred**
**Beer Lindengasse 8**
**A-1070 Wien (AT)**

(54) **Eiprodukt und Verfahren zur Herstellung desselben.**

(57) Beschrieben wird ein insbesondere als Eiaufstrich verwendbares Eiprodukt, das einen hohen Gehalt an Ei aufweist. Beispielsweise enthält das erfindungsgemäße Eiprodukt 90 bis 95 Gew.-% gekochtes Ei, das teilweise stückig und teilweise fein zerkleinert (pastös) vorliegt, 5 bis 10 Gew.-% Öl und 2 bis 10 Gew.-% an zusätzlichen Stoffen, wie Gewürzen und/oder zerkleinertem Gemüse.

Es wird auch ein Verfahren zur Herstellung des Eiproduktes angegeben, mit dem ein nach einer Pasteurisierung ohne Konservierungsmittel lange Zeit haltbares Eiprodukt herstellbar ist.

**EP 0 336 919 A1**

**Beschreibung**

## Eiprodukt und Verfahren zur Herstellung desselben

Die Erfindung betrifft ein Eiprodukt, insbesondere ein als Eiaufstrich verwendbares Eiprodukt, mit einem Gehalt an Öl, insbesondere Pflanzenöl.

Die derzeit bekannten Eiprodukte, wie beispielsweise Mayonnaisen, enthalten vergleichsweise wenig Ei, wobei die Gehalte an Ei in der Gegend von höchstens 10 bis 20 Gew.% liegen.

Aus "Französische Küche", M. Piepenstock, Seiten 14 und 15, Heyne-Buch Nr. 4001 ist die Herstellung von gefüllten Eiern (und gefüllten Tomaten) bekannt. Dabei soll der Dotter aus gekochten und halbierten Eiern entfernt und mit einer Füllmasse vermengt werden. Als mögliche Füllmassen sind in der Literaturstelle "Französische Küche" u.a. Mischungen aus gehacktem, gekochtem Ei und Mayonnaise erwähnt. Unter Berücksichtigung der Gesamtoffenbarung der Literaturstelle "Französische Küche" ist davon auszugehen, daß bei der Angabe der Bestandteile der Füllmassen die Verwendung des Wortes "Ei" sich auf die Verwendung von Dottern bezieht. Abgesehen davon ist in der Literaturstelle "Französische Küche" keine wie auch immer geartete Mengenangabe, d.h. keine Angabe über den Gehalt an Öl im Eiprodukt, enthalten.

Die US-PS 3 232 769 betrifft ein Verfahren zur Herstellung von Eiprodukten, bei welchem Eiklar und Dotter getrennt gekocht werden. Dann werden das Eiklar und der Dotter gemischt und zerkleinert, worauf weitere Zutaten zugemischt werden können. Die weiteren Verfahrensschritte gemäß der US-PS 3 232 769 sind die Einstellung des pH-Wertes zur Unterbindung von Bakterienwachstum und schließlich das Erhitzen des Eiproduktes zur Sterilisierung nach dem Abfüllen in Gläser. Die US-PS 3 232 769 erwähnt als mögliche Zutaten für das Eiprodukt in Spalte 3, Zeilen 7-9 auch ein Salatdressing, das Öl enthält. Jedoch gibt die US-PS keinerlei Mengenangaben über den Zusatz des Salatdressing oder den Gehalt des Salatdressing an Öl wieder.

Da bei der Verarbeitung von gekochten Eiern, z.B. beim Färben gekochter Eier zu Ostern, jährlich mehrere 100.000 Stück Brucheier anfallen, die bislang vernichtet werden mußten, weil die bekannten Eiprodukte wegen ihres geringen Eigehaltes eine sinnvolle Verwertung von Bruchei nicht erlauben, liegt der Erfindung die Aufgabe zugrunde, ein Eiprodukt anzugeben, mit dem Eier, z.B. Brucheier, einer sinnvollen Verwertung zugeführt werden können.

Erfindungsgemäß wird diese Aufgabe mit einem beispielsweise als Eiaufstrich verwendbaren Eiprodukt gelöst, welches durch einen Gehalt von 90 bis 95 Gew.-% gekochtem Ei und 5 bis 10 Gew.-% Öl, insbesondere Pflanzenöl, und allenfalls einen Gehalt an Gewürzstoffen gekennzeichnet ist, wobei das gekochte Ei teilweise stückig und teilweise fein zerkleinert vorliegt.

Dieses Eiprodukt unterscheidet sich in erster Linie durch seinen hohen Gehalt an gekochtem Ei von bisher bekannten Eiprodukten und die Möglichkeit, es als Eiaufstrich zu verwenden.

Da das gekochte Ei teilweise stückig zerkleinert ist bzw. teilweise fein zerkleinert (d.h. pastös) ist, kann das Eiprodukt als Eiaufstrich verwendet werden.

In der Praxis kann das beispielsweise als Eiaufstrich verwendbare Eiprodukt gemäß einem Vorschlag der Erfindung dadurch gekennzeichnet sein, daß 50 bis 85 Gew.-% des gekochten Eis fein zerkleinert (pastös) vorliegen und der restliche Anteil des gekochten Eis stückig zerkleinert vorliegt.

Bevorzugt ist im Rahmen der Erfindung, wenn der stückig zerkleinerte Anteil an gekochtem Ei eine Korngröße von 2 bis 7 mm, vorzugsweise etwa 5 mm besitzt.

Eine andere Ausführungsform des erfindungsgemäßen Eiproduktes ist dadurch gekennzeichnet, daß das Öl des Eiproduktes, wie an sich bekannt, in Form von Mayonnaise mit einem Ölgehalt von bis zu 90 Gew.-% enthalten ist, wobei der Gehalt an Mayonnaise bis zu 15 Gew.-% beträgt. Dabei kann vorgesehen sein, daß das Eiprodukt Mayonnaise in einer Gesamtmenge von 10 bis 15 Gew.-%, bezogen auf den Anteil an gekochtem Ei, enthält. Eine Mayonnaise, mit welcher der im erfindungsgemäßen Eiprodukt enthaltene Ölgehalt in das Eiprodukt eingebracht werden kann, enthält beispielsweise 80 bis 90 Gew.-% Öl, 10 bis 20 Gew.-% Ei sowie vorzugsweise 3 Gew.-% Emulgator und einen Zusatz an Essig.

Das erfindungsgemäße Eiprodukt besteht somit aus 90 bis 95 Gew.-% gekochtem Ei, das vorzugsweise zum Teil stückig zerkleinert und zum anderen Teil fein zerkleinert (pastös) ist, und aus 5 bis 10 Gew.-% Öl (Pflanzenöl), dem entsprechende Gewürzstoffe und/oder Frischgemüse, vorzugsweise in würfelig geschnittener Form, zugesetzt sind.

Zur Herstellung des erfindungsgemäßen Eiproduktes werden hart gekochte Eier geschält und zerkleinert, den zerkleinerten Eiern Öl zugesetzt, die so erhaltene Masse verrührt und die Masse vorzugsweise nach dem Abfüllen in Behälter pasteurisiert. Gemäß der Erfindung wird weiter so vorgegangen werden, daß ein Anteil der hartgekochten und geschälten Eier durch Pressen durch ein Sieb, insbesondere ein Sieb mit einer Maschenweite von 5 x 5 mm stückig zerkleinert wird, daß ein weiterer Anteil der hartgekochten und geschälten Eier fein zerkleinert wird und daß den zerkleinerten Eiern, bezogen auf die Menge an hartgekochtem, geschältem und zerkleinertem Ei, 5 bis 15 Gew.-% Öl zugesetzt werden.

Dabei ist es bevorzugt, wenn das Öl den gekochten, geschälten und zerkleinerten Eiern in Form einer Mayonnaise, bestehend aus 10 bis 20 Gew.-% Ei, 80 bis 90 Gew.-% Öl, Emulgator und ggf. Essig zugesetzt wird, wobei 10 bis 20, vorzugsweise 15 Gew.-% Mayonnaise verwendet werden.

Sollen in das Eiprodukt Gewürze und/oder Gewürzmischungen eingemischt werden, dann wird gemäß einem Vorschlag der Erfindung dieser Zusatz vor dem Pasteurisieren ausgeführt, wobei man beispielsweise je 100 kg Eiprodukt bis zu 300 g, für gewöhnlich aber 200 g Gewürzmischung zusetzen kann.

Beim erfindungsgemäßen Verfahren kann man aber auch so vorgehen, daß in das Eiprodukt würfelig geschnittenes Gemüse und/oder frisches Gewürz, wie beispielsweise gewürfelte Gurken, gewürfelte Paprika, gewürfelte Karotten und grüne Petersilie in einer Gesamtmenge von 2 bis 10 Gew.-% zugesetzt werden.

Zum Pasteurisieren können die Behälter, in die das Eiprodukt abgefüllt wurde, 1 Stunde lang auf 95° C erhitzt werden.

Für die Durchführung des erfindungsgemäßen Verfahrens hat es sich als besonders vorteilhaft herausgestellt, wenn die Eier einer Vorbehandlung unterzogen werden. Diese Vorbehandlung kann erfindungsgemäß darin bestehen, daß die Eier vor dem Kochen wenigstens 12, vorzugsweise 16 Tage lang bei 15° C und 60 bis 70, vorzugsweise 65 bis 68 % relative Feuchte gelagert werden, daß die Eier vor dem Sieden in 10 min von 15 auf 60° C vorgewärmt werden, daß die so vorgewärmten Eier dann 8 bis 10 min lang in Wasser mit einer Temperatur von 90 bis 97°, vorzugsweise 92,5 bis 95,5° C gesiedet werden, daß die Eier nach dem Sieden mit kaltem Wasser auf eine Temperatur von 30 -40° C abgekühlt und daß die so kernweich gekochten Eier geschält werden.

Im einzelnen kann bei der Herstellung des erfindungsgemäßen Eiproduktes erfindungsgemäß wie folgt vorgegangen werden:

Die zu verarbeitenden Eier werden wenigstens 12, vorzugsweise aber 16 Tage lang in einem Klimaraum bei 15° C und 65 bis 68 % relativer Feuchte gelagert.

Nach Beendigung der Lagerung werden die Eier vor dem Sieden in etwa 10 min von 15° C (d.i. die Temperatur der Vorlagerung) auf 60° C vorgewärmt. Die so vorgewärmten Eier werden dann in Wasser, das auf eine Temperatur von 92,5 bis 95,5° C erwärmt wurde, eingelegt und, je nach Eigröße, 8 bis 15 min lang gesiedet. Bei diesen Siedebedingungen wird das Eiweiß fest, wogegen der Dotter nicht vollkommen hart wird, sondern wenigstens im innersten Bereich speckig bleibt.

Falls die Eier nach dem Sieden nicht unmittelbar der Schälmaschine zugeführt werden können, ist eine Lagerung ohne weiteres möglich.

In jedem Falle werden die Eier nach dem Sieden durch Eintauchen in Kaltwasser (z.B. in eine Kaltwasserwanne) auf eine Temperatur von 20 bis 40° C abgeschreckt und dann entweder in einer Schälmaschine vollautomatisch oder von Hand aus geschält.

Die geschälten Eier werden hierauf zerkleinert, wobei ein Anteil mit einer einheitlichen Granulatgröße und ein pastöser Anteil hergestellt wird. Beispielsweise wird ein Teil der Eier fein zerkleinert (z.B. zwei Drittel des Ansatzes) und das andere Drittel der Eier durch ein Sieb mit einer Maschenweite von 5 x 5 mm zu drücken, wodurch vom härteren Eiweiß ein würfeliger Anteil anfällt, der im fertigen Eiprodukt in der im übrigen pastösen Masse optisch erkennbar ist und beim Aufstreichen eine körnige Struktur ergibt.

Nach dem Zerkleinern der gekochten Eier wird die erhaltene Masse mit der entsprechenden Menge Öl, den Gewürzen und den allenfalls zugesetzten Gemüsestücken vermischt.

Statt das zerkleinerte Ei mit Öl und den übrigen Zutaten zu vermischen, d.h. die Zutaten einzeln zuzugeben, ist es auch möglich, eine Vormischung herzustellen. Beispielsweise kann man eine Vormischung aus Pflanzenöl und Gewürzen herstellen, die dann einfach mit der Eimasse vermischt wird.

Es ist auch möglich, den Ölgehalt des Eiproduktes, der bei 5 bis 10 Gew.-% liegt, in Form einer Mayonnaise zuzusetzen. Beispielsweise kann hiezu eine Mayonnaise verwendet werden, die 80 bis 90 Gew.-% Öl, 10 bis 20 Gew.-% Ei, 0,3 Gew.-% Emulgator (Topemulgat KF, Hersteller: Fa. Lucas Meyer, Hamburg) und etwas Essig enthält, verwendet werden.

Die zerkleinerten und mit Öl (Mayonnaise) versetzten gekochten Eier werden so lange gerührt, bis eine glatte und bis auf die körnige Struktur homogene Masse erreicht wird (der pH-Wert dieser Masse liegt im sauren Bereich).

Die so erhaltene Eiproduktmasse wird in Behälter, z.B. in Glasgefäße mit Schraubverschluß, abgefüllt und dann zwecks Erzeugung einer Vollkonserve ohne zugesetzte Konservierungsmittel pasteurisiert. Die Pasteurisierungsbedingungen sind für 200 g-Glasbehälter mit Schraubverschluß ein vorzugsweise 1 Stunde langes Erhitzen auf 95° C. Bei diesen Pasteurisierungsbedingungen wird, bei einem pH-Wert 4,6 des Eiproduktes, ein Pasteurisierungswert von P = 11,3 erhalten.

Ein Beispiel für die Gesamtzusammensetzung eines erfindungsgemäßen Eiproduktes ist die folgende:

| Eimasse | 85 | Gew.-% |
|---|---|---|
| Mayonnaise Öl | 13 | Gew.-% |
| Ei | 1,5 | Gew.-% |
| Emulgator | 0,03 | Gew.-% |
| Einlage (Gemüse, Gewürze) | 2 bis 10 Gew.-% (ist von Eimasse abzuziehen) | |

Weiters können dem erfindungsgemäßen Eiprodukt Gewürzmischungen und andere Einlagen zugemengt werden. Nachstehend werden Beispiele für Gewürzmischungen und Einlagen angegeben:

Gewürzmischungen:
Folgende Gewürzmischungen (bevorzugt werden Extraktmischungen verwendet) können verwendet werden:

    a) Curry Dragoco Nr. 9308922 Aufwandsmenge 200 g/100 kg
    b) Gurke-Dill Nr. 9372337
    c) Sauce Tartare Nr. 9371677
    d) Pfeffer Spezial Nr. 9308929
    e) Frühlingskräuter Nr. 9372155

Einlagen:
Zusätzlich kann dem Eiprodukt gewürfeltes Gemüse bzw. frisches Gewürz beigefügt werden.
    zu b) gewürfelte Gurkenstücke,

zu c) gewürfelte rote Paprika, gewürfelte Karotten, grüne Petersilie und

zu d) gewürfelte grüne Paprika

(Würfelgröße etwa 3 bis 4 mm Kantenlänge, Menge: 2 bis 10 Gew.-%)

Nachstehend wird ein Beispiel für ein erfindungsgemäßes Eiprodukt angegeben:

Beispiel:

Masse:

85 Gew.-% Ei, 15 Gew.-% Mayonnaise (90 % Fett) Gesamtmenge ca. 18 kg, 3 Chargen zu ca. 6 kg in je 30 Gläser mit Schraubverschluß.

Mayonnaise-Basis:

300 g Ei, 2700 g Öl, 9 g Emulgator Topemulgat KF und 0,25 l Essig (5 %-ig).

Eier:

Hartgekochte Eier schälen, 1/3 der Eier durch 5 x 5 mm Sieb pressen, Rest fein, pastös zerkleinern.

Würzung: Berechnet für 6 kg Chargen

| | | | |
|---|---|---|---|
| 1. | Curry | 14 g | |
| | | 12 g | Pfeffer |
| | | 48 g | Salz |
| 2. | Gurke/Dille | 14 g | |
| | | 12 g | Pfeffer |
| | | 48 g | Salz |
| 3. | Tartar | 18 g | |
| | | 12 g | Pfeffer |
| | | 48 g | Salz |

Die Massen werden nach dem Einrühren von Gewürzmischung und Mayonnaise rasten gelassen, dann verkostet, eventuell nachgewürzt.

Abfüllung:

Gut gereinigte Gläser werden mit Masse so weit gefüllt, daß oben ein möglichst kleiner Luftraum freibleibt, und mit dem Aufdrehverrschluß fest verschlossen.

Pasteurisieren:

Die 200 g Gläser werden bei 95° C 1 Stunde lang erhitzt. Dies ergibt bei pH 4,6 des Eiproduktes einen Pasteurisationswert von P = 11,3.

Mit dem erfindungsgemäßen Produkt wird erstmals ein Eiprodukt zur Verfügung gestellt, das bei einem derart hohen Eigehalt haltbar ist, wobei darauf hinzuweisen ist, daß Mayonnaise einen nur ganz geringen Eigehalt von 2 bis 3 Eiern je etwa 4 kg Mayonnaise besitzt.

**Patentansprüche**

1. Eiprodukt, insbesondere Eiaufstrich aus gekochtem Ei, mit einem Gehalt an Öl, insbesondere Pflanzenöl, gekennzeichnet durch einen Gehalt von 90 bis 95 Gew.-% an gekochtem Ei und 5 bis 10 Gew.-% an Öl, insbesondere Pflanzenöl, und allenfalls einen Gehalt an Gewürzstoffen, wobei das gekochte Ei teilweise stückig und teilweise fein zerkleinert vorliegt.

2. Eiprodukt nach Anspruch 1, dadurch gekennzeichnet, daß 50 bis 85 Gew.-% des gekochten Eis fein zerkleinert vorliegen und der restliche Anteil des gekochten Eis stückig zerkleinert vorliegt.

3. Eiprodukt nach Anspruch 1 oder 2, dadurch gekennzeichnet, daß der stückig zerkleinerte Anteil an gekochtem Ei eine Korngröße von 2 bis 7, vorzugsweise von 5 mm besitzt.

4. Eiprodukt nach einem der Ansprüche 1 bis 5, dadurch gekennzeichnet, daß das Öl des Eiproduktes, wie an sich bekannt, in Form von Mayonnaise mit einem Öl-gehalt von bis zu 90 Gew.-% enthalten ist, wobei der Gehalt an Mayonnaise bis zu 15 Gew.-% beträgt.

5. Eiprodukt nach Anspruch 4, dadurch gekennzeichnet, daß das Eiprodukt Mayonnaise in einer Gesamtmenge von 10 bis 15 Gew.-%, bezogen auf den Anteil an gekochtem Ei, enthält.

6. Eiprodukt nach Anspruch 4 oder 5, dadurch gekennzeichnet, daß eine Mayonnaise enthalten ist, die 80 bis 90 Gew.-% Öl und 10 bis 20 Gew.-% Ei, vorzugsweise 3 Gew.-% Emulgator und einen Zusatz an Essig enthält.

7. Verfahren zum Herstellen eines Eiproduktes nach einem oder mehreren der Ansprüche 1 bis 6, bei dem hart gekochte Eier geschält und zerkleinert werden, den zerkleinerten Eiern Öl zugesetzt, die so erhaltene Masse verrührt und die Masse vorzugsweise nach dem Abfüllen in Behälter pasteurisiert wird, dadurch gekennzeichnet, daß ein Anteil der hartgekochten und geschälten Eier durch Pressen durch ein Sieb, insbesondere ein Sieb mit einer Maschenweite von 5 x 5 mm stückig zerkleinert wird, daß ein weiterer Anteil der hartgekochten und geschälten Eier fein zerkleinert wird und daß den zerkleinerten Eiern, bezogen auf die Menge an hartgekochtem, geschältem und zerkleinertem Ei, 5 bis 15 Gew.-% Öl zugesetzt werden.

8. Verfahren nach Anspruch 7, dadurch gekennzeichnet, daß das Öl den gekochten, geschälten und zerkleinerten Eiern in Form einer Mayonnaise, bestehend aus 10 bis 20 Gew.-% Ei, 80 bis 90 Gew.-% Öl, Emulgator und ggf. Essig zugesetzt wird, wobei 10 bis 10, vorzugsweise 15 Gew.-% Mayonnaise verwendet werden.

9. Verfahren nach Anspruch 7 oder 8, dadurch gekennzeichnet, daß vor dem Pasteurisieren in das mit dem Öl vermengte, zerkleinerte Ei Gewürze und/oder Gewürzmischungen eingemischt werden.

10. Verfahren nach Anspruch 9, dadurch gekennzeichnet, daß je 100 kg Eiprodukt bis zu 300, vorzugsweise bis zu 200 g Gewürzmischung zugesetzt werden.

11. Verfahren nach einem der Ansprüche 7 bis 10, dadurch gekennzeichnet, daß in das Eiprodukt würfelig geschnittenes Gemüse und/oder frisches Gewürz, wie beispielsweise gewürfelte Gurken, gewürfelte Paprika, gewürfelte Karotten und grüne Petersilie in einer Gesamtmenge von 2 bis 10 Gew.-% zugesetzt werden.

12. Verfahren nach einem der Ansprüche 7 bis 11, dadurch gekennzeichnet, daß das in Behälter abgefüllte Eiprodukt zum Pasteurisieren 1 Stunde lang auf 95° C erhitzt wird.

13. Verfahren nach einem der Ansprüche 7 bis 12, dadurch gekennzeichnet, daß die Eier vor dem Kochen wenigstens 12, vorzugsweise 16 Tage lang bei 15° C und 60 bis 70, vorzugsweise 65 bis 68 % relative Feuchte gelagert werden, daß die Eier vor dem Sieden in 10 min von 15 auf 60° C vorgewärmt werden, daß die so vorgewärmten Eier dann 8 bis 15 min lang in Wasser mit einer Temperatur von 90 bis 97°, vorzugsweise 92,5 bis 95,5° C gesiedet werden, daß die Eier nach dem Sieden mit kaltem Wasser auf eine Temperatur von 20 - 40° C abgekühlt und daß die so gesottenen Eier geschält werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 093 487  (E. JONES et al.) <br> * Spalte 5, Zeilen 46-54, Ansprüche 1,2 * <br> --- | 1,12 | A 23 L  1/32 <br> A 23 L  1/24 <br> A 23 B  5/00 |
| A | FR-A-1 576 585  (P. CORCELLET) <br> * Ansprüche 1-8 * <br> --- | 1,9 | |
| A | PATENT ABSTRACT OF JAPAN <br> Band 7, Nr. 14 (C-146) (1159), 20. <br> Januar 1983; & JP - A - 57174072 <br> (KIYUUPII TAMAGO K. K.) 26.10.1982 <br> --- | 1,9 | |
| D,A | US-A-3 232 769  (M. W. MILLER) <br> * Ansprüche 1-9 * <br> ----- | 1 | |

RECHERCHIERTE
SACHGEBIETE (Int. Cl.5)

A 23 L  1/00
A 23 B  5/00

Der vorliegende Recherchenbericht wurde für alle Patentansprüche erstellt

| Recherchenort | Abschlußdatum der Recherche | Prüfer |
|---|---|---|
| BERLIN | 16-06-1989 | SCHULTZE D |